# EUROPEAN PATENT APPLICATION

(11) **EP 4 672 130 A1**
(43) Date of publication of application: **31.12.2025**
(21) Application number: 24760458.0
(22) Date of filing: 26.02.2024
(51) Int. Cl.: G06Q 50/18, G06F 16/90

(54) **INFORMATION PROCESSING METHOD**

(30) Priority: 24.02.2023 US 202363486899 P
(71) Applicant: Legalon Technologies, Inc., Tokyo 150-6219 (JP)
(72) Inventor: MORI, Takafumi, Tokyo 150-6219 (JP)
(74) Representative: Hoffmann Eitle
(86) International application number: PCT/JP2024/006885
(87) International publication number: WO 2024/177160

(57) **Abstract**

An information processing method according to an embodiment includes: acquiring a revision policy for each of at least one input unit of a first legal document; acquiring at least one revised input unit that is revised using at least one prompt and a natural language processing model, the at the least one prompt being generated based on at least the input unit and the revision policy for the input unit; and outputting the at least one revised input unit.

## Description

### TECHNICAL FIELD

An embodiment of the present invention relates to an information processing method.

### BACKGROUND ART

Conventionally, for example, there is a system that supports review of a document by a user. The user revises the document while referring to the result of the document review output by the system. Therefore, the work load of the user is large. There is room for further improvement in reducing the work load of the user.

### SUMMARY OF INVENTION

### PROBLEM TO BE SOLVED BY THE INVENTION

An embodiment of the present invention has been made in view of the above circumstances, and is to achieve reduction in work load of a user in a system that supports review of a document by the user.

### MEANS FOR SOLVING PROBLEM

An information processing method according to an embodiment includes: acquiring a revision policy for each of at least one input unit of a first legal document; acquiring at least one revised input unit that is revised using at least one prompt and a natural language processing model, the at the least one prompt being generated based on at least the input unit and the revision policy for the input unit; and outputting the at least one revised input unit.

### BRIEF DESCRIPTION OF DRAWINGS

FIG. 1 is a diagram illustrating an outline of an example of processing in a revision proposal system 100 according to an embodiment;
FIG. 2 is a diagram illustrating a configuration of the revision proposal system 100 according to the embodiment;
FIG. 3 is a diagram illustrating an example of data related to a revision policy;
FIG. 4A is a block diagram illustrating an example of a hardware configuration of an information processing apparatus 10 according to the embodiment;
FIG. 4B is a block diagram illustrating an example of a hardware configuration of a terminal apparatus T1 according to the embodiment;
FIG. 5 is a diagram illustrating an example of functional blocks in a processor 21; and
FIG. 6 is a diagram illustrating an example of a document review screen 60 displayed as a web browser screen on a display apparatus 30 of the terminal apparatus T1 in document review processing.

### DESCRIPTION OF EMBODIMENTS

Hereinafter, an embodiment will be described with reference to the drawings.

In the present specification, a "unit" does not simply mean a physical means, but includes a case where a function of the "unit" is achieved by software. In addition, the function of one "unit" or apparatus may be achieved by two or more physical means, apparatuses, or pieces of software, and the functions of two or more "units" or apparatuses may be achieved by one physical means, apparatus, or piece of software.

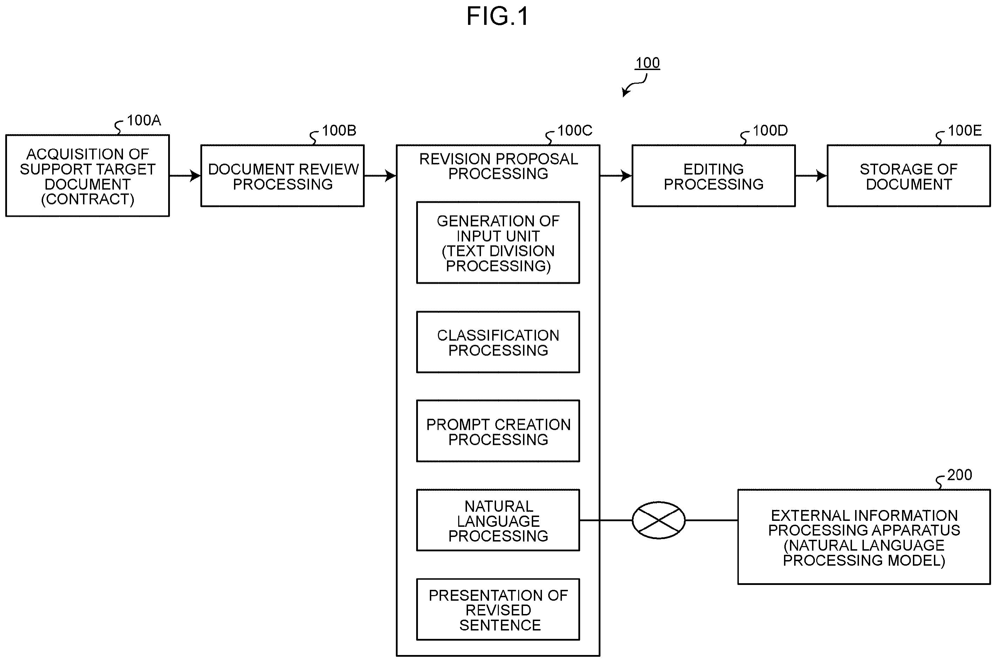

FIG. 1 is a diagram illustrating an outline of an example of processing in a revision proposal system 100 according to an embodiment.

The revision proposal system 100 of the present embodiment is an information processing system achieved by a revision proposal program, and is an information processing system that proposes revision of the content of a target item of a contract that is a support target document.

For example, upon entering into an agreement, the contracting parties agree. Upon agreement of the contracting parties, one or both of the contracting parties may inspect and revise the contract. As an example, in the case of an agreement between companies, for example, the legal department in charge of agreement inspection inspects the content of the contract and revise the contract as necessary. Note that the inspection of the contract may also be referred to as check, examination, or review.

A legal document to be processed by the revision proposal system 100 of the present embodiment is, for example, a document including legal contents that cause a predetermined legal effect in the document, and includes criteria of a predetermined viewpoint such as preferable or unpreferable in terms of the legal contents or formality. For example, this includes a contract, an application, a memorandum, company regulations, a policy, and the like. In the present embodiment, the contract will be described as an example. In addition, the legal document may be referred to as a support target document as appropriate.

The legal document proposed to be revised by the revision proposal system 100 of the present embodiment can be processed by a computer, and is, for example, a document in an electronic medium (electronic document). It is an electronic document created by predetermined electronic document creation software, or an electronic document obtained by digitizing a contract of a paper medium using a predetermined image analysis technology (for example, an optical character recognition (OCR) technology).

The revision proposal system 100 of the present embodiment provides a document creation support service. The document creation support service is a service including, for example, at least any of: executing document review processing on a support target document on a web browser and providing the result thereof to a user, automatically revising the document using the result of the document review processing and presenting the result as a revision candidate (revision proposal processing), executing document editing in response to an instruction from the user, saving the edited document or providing it to the user, editing additional information (for example, meta information, comment information, chat information, format information, and the like) associated with the support target document, and creating a new document (including copying).

In particular, the revision proposal processing by the revision proposal system 100 of the present embodiment is executed using an artificial intelligence model using a natural language. Here, the artificial intelligence model using a natural language is a natural language processing model represented by, for example, a generative pre-trained transformer (GPT). This natural language processing model uses a natural language text called a prompt as input, and outputs a natural language text automatically generated in response to the prompt.

As the natural language processing model used in the revision proposal system 100 according to the present embodiment, for example, a natural language processing model disclosed in https://arxiv.org/abs/2203.02155,https://openai.com/blog/ch atgpt/ can be used.

In addition, the revision proposal system 100 of the present embodiment automatically generates a prompt (natural language character string for inquiring the natural language processing model) input to the natural language processing model in the revision proposal processing based on at least one input unit generated from the support target document and a revision policy for the input unit. Here, the input unit is, for example, a sentence in units of articles, sections, and items, and can be generated by dividing the support target document based on predetermined criteria. In addition, the revision policy is information indicating a policy for revising the input unit, and includes, for example, a natural language such as "the term ∘∘ is deleted", "the term ×× is always included", "this is a mandatory provision", or "this is an advisory clause".

The revision policy can be acquired, for example, by referring to a rule in which a combination of the type (for example, a type of each sentence such as a sentence defining a purpose, a sentence defining title, and a sentence defining a period) of the sentence and the revision policy is defined by a plurality of patterns. In addition, this rule is created by, for example, an expert attorney or the like, and is managed by a database. The combination of the type of the sentence and the revision policy managed by the database can be added or revised at any timing as necessary. Note that the revision policy can also be acquired by, for example, a trained model receiving an input unit and outputting a revision policy. In addition, it can also be acquired by a combination of processing using a trained model and rule-based processing using a database. In addition, for example, the database includes information in which a plurality of sample sentences and a plurality of revision policies are associated with each other. The revision proposal system 100 may acquire the revision policy for each of the at least one input unit based on the similarity between the at least one input unit and the plurality of sample sentences. Note that the sample sentence can include a sentence before revision and a sentence after revision.

FIG. 1 illustrates an example in which the revision proposal processing includes input unit generation processing, classification processing, prompt creation processing as preprocessing, natural language processing, and revised sentence presentation processing. In the input unit generation processing, for example, text division processing using a text classifier is executed. In the classification processing, for example, the type of the text obtained by the division processing is classified by the classifier. In the prompt creation processing, for example, a prompt including an input unit and a revision policy is created by referring to a database. In the natural language processing, for example, a revised sentence is acquired using a prompt including an input unit and a revision policy and a natural language processing model. In the revised sentence presentation processing, for example, the revised sentence acquired in the natural language processing is presented to the user as a revision candidate. That is, in the natural language processing, a plurality of revision candidates to be candidates of the at least one revised input unit is generated using at least one prompt and a natural language processing model. In the revised sentence presentation processing, the plurality of revision candidates generated is output (presented). The plurality of revision candidates may be stored, and the stored plurality of revision candidates may be output in response to an instruction from the user.

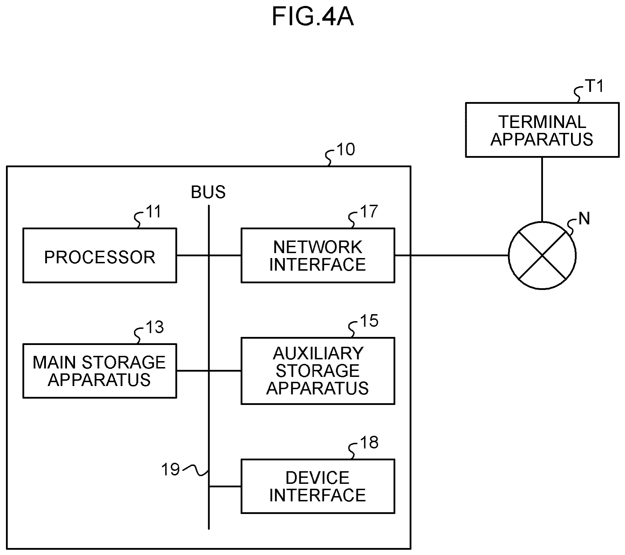

Note that the natural language processing model used in the natural language processing may be connected to the revision proposal system 100 via a network and stored in an external information processing apparatus 200 including at least one processor and a memory as illustrated in FIG. 1. In addition, the natural language processing model may be provided in the form of an API or the like from a model vendor. Note that the external information processing apparatus 200 has a configuration similar to that of the information processing apparatus in FIG. 4A, for example.

In the present specification, the document review processing is, for example, processing of analyzing whether or not information included in a support target document is appropriate on the basis of certain criteria and outputting the result thereof. For example, the document review processing is processing including checking and examining whether or not information included in the support target document is appropriate on the basis of certain criteria. Specifically, the processing includes collating terms in the document with a check list prepared in advance, and outputting a result of the collation or an indication included in the check list.

Note that, in the revision proposal processing, for example, the input unit included in the prompt of the natural language processing model may be generated by dividing the entire text of the support target document, for example, in units of text or the like. In addition, for example, the input unit included in the prompt of the natural language processing model can also be generated for, for example, a sentence in units of articles, sections, and items, determined to be inappropriate or favorably revised by the document review processing.

In the revision proposal processing, the revision proposal system 100 according to the present embodiment acquires at least one revised input unit revised using at least one prompt generated based on at least the input unit and the revision policy for the input unit, and a natural language processing model.

Accordingly, according to the present embodiment, it is possible to give a constraint based on the revision policy to the natural language processing model, and it is possible to acquire the revised input unit according to the revision policy. As a result, it is possible to acquire a more specific and reliable revised sentence as compared with natural language processing using a prompt not including the revision policy as input. On the other hand, in the case of the natural language processing using a prompt not including the revision policy as input, the obtained revised sentence is often a result that strongly depends on training data of the natural language processing model to be used.

The user who receives the provision of the document creation support service of the present embodiment can check and study, on the browser screen, a revised document as a candidate for the revision proposal automatically generated in the revision proposal processing. In addition, the user can revise the support target document on the basis of the review result only by confirming the displayed revision proposal or selecting a desired revision proposal. In particular, even in the case of revision of a legal document such as an agreement document requiring specialized knowledge, it is possible to acquire a candidate for a reliable revised sentence based on the revision policy and to revise the support target document by a selection operation. As a result, it is possible to greatly reduce the work load of the user in revising the support target document.

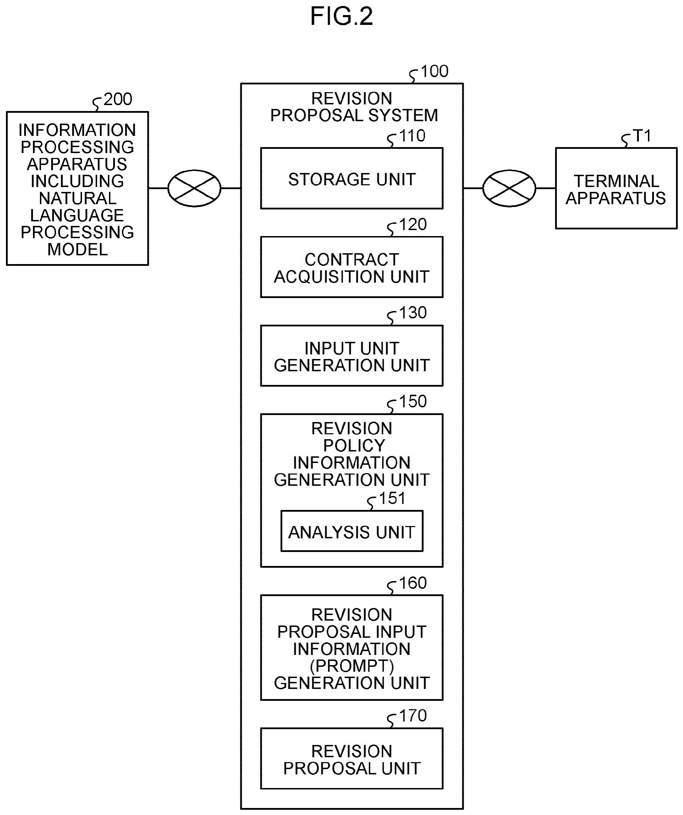

FIG. 2 is a diagram illustrating a configuration of the revision proposal system 100 according to an embodiment. The revision proposal system 100 is, for example, an information processing system communicably connected to the terminal apparatus T1 via a network such as the Internet. Details of the revision proposal system 100 will be described below.

The terminal apparatus T1 is, for example, a computer used by the user of the revision proposal system 100, and is a smartphone, a tablet terminal, a personal computer, or the like.

For example, the user accesses the revision proposal system 100 through the terminal apparatus T1, and uploads a contract that is an example of a legal document to the revision proposal system 100. Then, the user receives the provision of the revision proposal information of a target item in the contract through the terminal apparatus T1. In the present specification, the contract may be read as a legal document as appropriate.

Although only one terminal apparatus T1 is illustrated in FIG. 2, the number of terminal apparatuses T1 is not limited thereto.

Next, details of the revision proposal system 100 will be described. The revision proposal system 100 of the present embodiment includes a storage unit 110, a contract acquisition unit 120, an input unit generation unit 130, a revision policy information generation unit 150, a revision proposal input information (prompt) generation unit 160, and a revision proposal unit 170. Each unit illustrated in FIG. 2 can be achieved, for example, using a storage area or by executing a program stored in the storage area by a processor.

The storage unit 110 of the present embodiment stores information to be processed in the revision proposal system 100. The storage unit 110 can store, for example, contract information, input unit information, and policy information to be described below. The storage unit 110 may be, for example, a memory.

For example, the contract acquisition unit 120 of the present embodiment acquires contract information related to a contract and stores the contract information in the storage unit 110. The contract acquisition unit 120 can acquire electronic data of a contract.

Here, the contract information is information related to the contract, and includes, for example, status information, position information, and agreement type information (these are collectively referred to as meta information), and contract content information.

The status information of the present embodiment is information indicating the status of the contract, and is, for example, information indicating a revision status of the contract. Examples of the status information include "the other party's draft" indicating that it is a draft (for example, a first draft) of the other party of the contract, "the other party's revision proposal" indicating that it is a contract revised by the other party of the contract, and "reviewed" indicating that it is a contract checked by the own company (the operator to which the user belongs).

The position information of the present embodiment is information indicating the position of the contract, and is, for example, information indicating the position of the own company (the operator to which the user belongs). The position information may be, for example, the "entrusting side" indicating the entrustor side in a service agreement, or the "disclosing side" indicating the disclosing side of confidential information in a confidentiality agreement.

The agreement type information of the present embodiment is information indicating the type of a contract, and may be, for example, a "service agreement" or a "confidentiality agreement".

The contract content information of the present embodiment is information (for example, text data) indicating the content of the contract.

The contract acquisition unit 120 of the present embodiment may acquire contract information from the terminal apparatus T1, for example. That is, the user may provide (upload) the contract to the revision proposal system 100 through the terminal apparatus T1, and the contract acquisition unit 120 may acquire the contract information the uploaded contract.

At this time, the contract acquisition unit 120 may acquire the contract information from the user through, for example, the operation of the terminal apparatus T1. In this case, for example, when receiving the upload of the contract from the terminal apparatus T1, the contract acquisition unit 120 may receive input (for example, input by a keyboard or selection of an item set in advance by a system) of at least part of contract information (for example, status information, position information, and agreement type information) from the user and acquire the contract information.

In addition, the contract acquisition unit 120 may acquire contract information from another information processing system, for example. In this case, for example, the user may provide the contract information to the another information processing system through the terminal apparatus T1, and the contract acquisition unit 120 may acquire the contract information provided from the another information processing system. Examples of another information processing system include a contract management system, a document management system, and a storage on a cloud.

In addition, the contract acquisition unit 120 may analyze the content information of the contract to acquire at least part of the contract information (for example, status information, position information, and agreement type information).

The contract information stored in the storage unit 110 includes, for example, a contract ID, a sequence ID, status information, position information, agreement type information, and contract content information.

The contract ID of the present embodiment is information for identifying a contract to be processed in the revision proposal system 100. The contract ID is identification information given to enable identification of each of the contracts before and after revision in the same agreement, that is, the contract ID is information uniquely identifying the contract (that is, the electronic document) acquired by the contract acquisition unit 120.

The sequence ID of the present embodiment is information for identifying an agreement indicated by a contract to be processed in the revision proposal system 100. That is, the sequence ID is, for example, one unit that manages a series of contracts (that is, a plurality of contracts, such as a draft contract, a revised contract, and an agreed contract, for the purpose of entering into an agreement) that have been drafted, revised, and agreed.

The contract acquisition unit 120 of the present embodiment may generate the sequence ID in response to, for example, the operation of the terminal apparatus T1 by the user. Specifically, in a case where the user uploads a pre-revision contract, for example, the pre-revision contract may be uploaded to an area that manages the contract (for example, a virtual folder managed on the revision proposal system 100), thereby generating a specific sequence ID (for example, a sequence ID corresponding to the virtual folder or the same sequence ID as the sequence ID of a pre-revision first contract).

The sequence ID of the present embodiment can be used, for example, as described below. In the negotiation of the content of the contract, there is a case where the counterparty wants to further revise the content proposed by the counterparty to revise the user's contract draft. The contract and the contract draft are sent from the counterparty, for example, by e-mail. However, it may be advantageous in terms of the content of the agreement to simply delete the revision content of the counterparty, but it may not be preferable from the viewpoint of negotiation. In such a case, it is possible to refer to the content of a contract (that is, a previous version) having the same sequence ID, to make a compromise for a revision policy to be input with respect to the policy applied to the previous version, to soften the expression of the contract, or to make a comment generated to be presented together with a revision proposal more polite. In addition, by retaining the information of the previous version of the contract under review, for example, it is possible to reduce the possibility that the negotiation becomes difficult due to the previous compromise point being brought up again.

In addition, in a case where a contract related to a contract to be reviewed is set, for example, in a case where two or more contracts, such as a contract that has been previously concluded and before update with respect to a contract to be reviewed, a basic contract in a case where a review target is an individual agreement, and a joint research and development agreement and a joint patent application agreement, define the same or related contents, and in a case where there is a contract with the same party, the agreement contents and the negotiation status may be taken into consideration.

These may be considered at a stage of generation of a revision policy or may be considered at a stage of generation of a prompt to be described below, but generation as a prompt is preferable because processing is simple.

The contract acquisition unit 120 of the present embodiment may extract information on the basis of, for example, the contracting parties in the contract, the creation date of the contract, and contract information (for example, status information, position information, agreement type information, and contract content information) of the contract.

The input unit generation unit 130 of the present embodiment divides the content of the contract for each item included in the contract on the basis of the contract information, and stores the input unit in the storage unit 110.

Here, the input unit may be, for example, the entire text of the contract, may be a unit obtained by dividing the contract into constituent units of the contract such as the title, the head, the main text, the signature, and the like, or may correspond to a text included in the contract. That is, the input unit generation unit 130 can divide the content of the contract, for example, for each "article" or "section".

For example, the input unit generation unit 130 can analyze the content of the contract and divide the content of the contract for each item on the basis of the position of characters (for example, the characters "article" or "section") corresponding to the input unit. Note that the input unit generation unit 130 may not divide all contracts for each input unit, and may not divide all the items of a contract for each item. That is, the input unit generation processing by the input unit generation unit 130 may be performed on only some of the contracts or may be performed on only part of the contract. In addition, the input unit generation unit may integrate units divided into a plurality of units or some of units divided into a plurality of units into one as necessary. For example, one legal issue may be defined across multiple articles. In this case, when division is performed in units of articles as described above, and a revision policy is acquired or a revision proposal is made for each article, it may be difficult to perform acquisition of an appropriate revision policy or make an appropriate revision proposal. In such a case, it is preferable to integrate parts having similar legal issues so that a revision policy can be appropriately acquired using a rule or a trained model.

In addition, prior to these pieces of processing, information necessary for document review such as text data may be extracted from the received document data, or processing of extracting text data from image data may be performed by processing such as OCR.

When the contract acquisition unit 120 acquires the contract information of the contract, the input unit generation unit 130 can divide the contract before revision for each item and generate the contract as the input unit information indicating the content before revision for each input unit.

The input unit information stored in the storage unit 110 includes, for example, an input unit ID, a contract ID, and input unit information.

The input unit ID of the present embodiment is information for identifying item information to be processed in the revision proposal system 100. The input unit information of the present embodiment is information indicating the content corresponding to the input unit, and is, for example, information indicating the content of each clause.

The revision policy information generation unit 150 of the present embodiment generates information regarding a policy as to how to preferably revise the contract. For example, document review processing is performed on the contract, and document review information is generated. For example, the document review information is based on information obtained by analyzing the document based on rules or criteria applied to the document (for example, certain rules, laws, conventions). For example, examples of the review information of the contract as in the present embodiment include (1) indication as to whether clauses included in a document (the contract in the present embodiment) are advantageous or disadvantageous to the user (party), (2) advice regarding revision and deletion of the clauses included in the contract, (3) indication that items to be usually included in the contract are missing, and suggestion of items to be added, and (4) information of the importance and the degree of recommendation of items in each review result. In addition, format information such as whether the form of a sentence meets criteria, and whether a prescribed term is used may also be included.

The revision policy information generation unit 150 of the present embodiment executes the document review processing using the contract data (an example of the data of a first legal document) received from the terminal apparatus T1. That is, an analysis unit 151 generates document review information to be described below regarding the document data as the document review processing. Note that the document review information is an example of analysis information.

The analysis unit 151 of the present embodiment extracts information included in the revision policy information generation unit 150, for example, included in a document (document data) and necessary for generating the revision policy information. Various techniques can be adopted as a method of extracting information from document data. For example, a keyword search of document data may be performed to extract a character, number, or the like included in the vicinity of the keyword. In addition, information can be extracted by morphological analysis, syntax analysis, semantic analysis, or context analysis. Further, information may be extracted by natural language processing using machine learning. Note that revision policy information generation processing may be performed on the received document without extracting information necessary for generating the policy information as described above.

Note that various techniques can be adopted to generate the document review information executed by the revision policy information generation unit 150. For example, it is preferable to generate the document review information on the basis of a rule based on a rule designed by a human, particularly an expert attorney, using the extracted information. In addition, it is also possible to use a trained model that receives the extracted information as input and outputs corresponding document review information. Further, it is also possible to adopt a combination of a rule-based method and a trained model.

In addition, the revision policy information generation unit 150 can also generate document review information according to the position of the user (party) using the meta information associated with the contract. Further, an analysis unit 103 can also generate the document review information by referring to the content of other documents (other versions of the support target document, other contracts related to the contract, and the like). The meta information includes those given to a document file itself such as the creator of the document and those given by a user or the like by being input separately from the file.

The meta information of the present embodiment includes, for example, at least one of a document ID, the document type (for example, the type such as a transaction basic agreement, a confidentiality agreement, a service agreement, or the like), a version, a creation date and time, an update date and time, an upload date and time, a creator, an updater, a deadline, and a document ID of a related document.

The revision policy information generation unit 150 of the present embodiment generates a prompt. The prompt is based on, for example, a sentence of an input unit and a revision policy instruction based on document review information for the input unit. Specifically, the revision policy information generation unit 150 generates a prompt described in a natural language such as "This input is (a text divided as an input unit)" or "Instruction is (a revision policy)".

The prompt thus obtained is input into the natural language processing model to obtain a revised input unit in which the input unit is revised.

Note that the natural language processing model may be stored in an information processing apparatus connected to the system via a network. In addition, the natural language processing model may be provided in the form of an API or the like from a model vendor.

FIG. 4A is a block diagram illustrating an example of a hardware configuration of the information processing apparatus 10 according to the embodiment. As illustrated in FIG. 4A, the information processing apparatus 10 is a computer, and includes, as an example, a processor 11, a main storage apparatus (memory) 13, an auxiliary storage apparatus (memory) 15, a network interface 17, a device interface 18, and a bus 19 that connects the components.

The information processing apparatus 10 illustrated in FIG. 4A includes one component for each of the components, but may include a plurality of components for the same component. In addition, although FIG. 4A illustrates one information processing apparatus 10, software may be installed in a plurality of computers, and each of the plurality of computers may execute the same or different part of processing of the software. In this case, there may be a form of distributed computing in which the computers communicate via the network interface 17 or the like to execute processing. That is, the information processing apparatus 10 according to the present embodiment may be configured as a system that achieves various functions described below by one or a plurality of computers executing commands stored in one or a plurality of storage apparatuses.

Various operations of the information processing apparatus 10 may be executed in parallel processing using one or a plurality of processors or using a plurality of computers via a network. In addition, various operations may be distributed to a plurality of arithmetic cores in the processor and executed in parallel processing. In addition, some or all of the processing, means, and the like of the present disclosure may be executed by at least one of a processor and a storage apparatus provided on a cloud communicable with the information processing apparatus 10 via a network. As described above, the processing of a document creation support system S of the present embodiment may be in the form of parallel computing by one or a plurality of computers.

The processor 11 may be, for example, an electronic circuit (process circuit, processing circuit, processing circuitry, central processing unit (CPU), graphics processing unit (GPU), field programmable gate array (FPGA), application specific integrated circuit (ASIC), or the like) including a control apparatus and an arithmetic apparatus of the information processing apparatus 10. In addition, the processor 11 may be a semiconductor apparatus or the like including a dedicated processing circuit. The processor 11 is not limited to an electronic circuit using an electronic logic element, and may be achieved by an optical circuit using an optical logic element. In addition, the processor 11 may include an arithmetic function based on quantum computing.

The processor 11 can perform arithmetic processing on the basis of data or software (program) input from each apparatus or the like of the internal configuration of the information processing apparatus 10 and output an arithmetic result or a control signal to each apparatus or the like. The processor 11 may control each component constituting the information processing apparatus 10 by executing an operating system (OS), an application, or the like of the information processing apparatus 10.

The information processing apparatus 10 of the present embodiment may be achieved by one or a plurality of processors 11. Here, the processor 11 may refer to one or a plurality of electronic circuits disposed on one chip, or may refer to one or a plurality of electronic circuits disposed on two or more chips or two or more devices. When a plurality of electronic circuits is used, the electronic circuits may communicate in a wired or wireless manner.

The main storage apparatus 13 is, for example, a storage apparatus that stores a command executed by the processor 11, various data, and the like, and information stored in the main storage apparatus 13 is read by the processor 11. The auxiliary storage apparatus 15 is a storage apparatus other than the main storage apparatus 13. Note that these storage apparatuses mean arbitrary electronic components capable of storing electronic information, and may be semiconductor memories. The semiconductor memory may be either a volatile memory or a nonvolatile memory. The storage apparatus for storing various data used in the information processing apparatus 10 according to the present embodiment may be achieved by the main storage apparatus 13 or the auxiliary storage apparatus 15, or may be achieved by a built-in memory built in the processor 11. For example, the storage unit of the present embodiment may be achieved by the main storage apparatus 13 or the auxiliary storage apparatus 15.

A plurality of processors may be connected (coupled) or a single processor 11 may be connected to one storage apparatus (memory). A plurality of storage apparatuses (memories) may be connected (coupled) to one processor. In a case where the information processing apparatus 10 of the present embodiment includes at least one storage apparatus (memory) and a plurality of processors connected (coupled) to the at least one storage apparatus (memory), at least one processor among the plurality of processors may include a configuration of being connected (coupled) to the at least one storage apparatus (memory). In addition, this configuration may be achieved by storage apparatuses (memories) and the processors 11 included in the plurality of computers. Further, a storage apparatus (memory) may include a configuration of being integrated with the processor 11 (for example, cache memory including L1 cache and L2 cache).

The network interface 17 is, for example, an interface for connecting to a network N wirelessly or by wire. As the network interface 17, it is sufficient if an appropriate interface such as one conforming to an existing communication standard is used. The network interface 17 may exchange information with an external apparatus connected via the network N. Note that the network N may be any of a wide area network (WAN), a local area network (LAN), a personal area network (PAN), or the like, or a combination thereof, and it is sufficient if information is exchanged between the information processing apparatus 10 and an external apparatus. Examples of the WAN include the Internet, examples of the LAN include IEEE802.11 and Ethernet (registered trademark), and examples of the PAN include Bluetooth (registered trademark) and near field communication (NFC).

The device interface 18 is an interface such as a universal serial bus (USB) directly connected to an output apparatus such as a display apparatus, an input apparatus, and an external apparatus. In addition, the external apparatus may be a storage apparatus (memory), a network storage, or a storage such as an HDD. In addition, the external apparatus may be an apparatus having some functions of the components of the information processing apparatus 10 of the present embodiment. That is, the information processing apparatus 10 may transmit or receive a part or the whole of the processing result of the external apparatus.

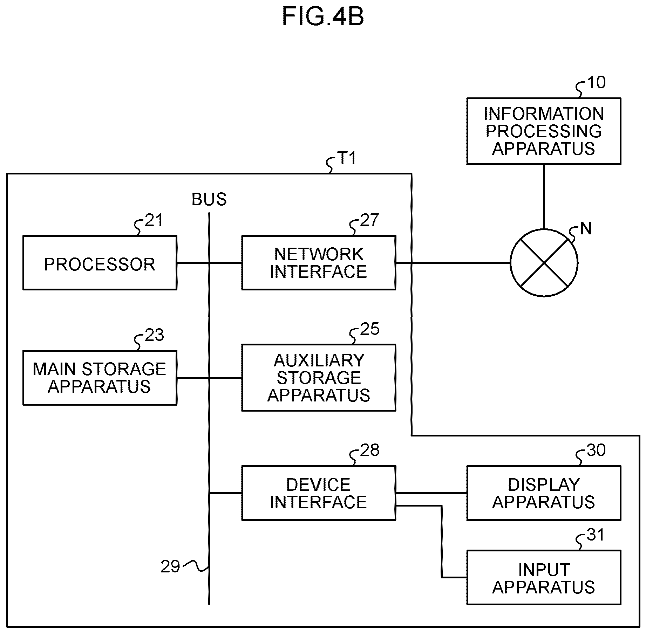

FIG. 4B is a block diagram illustrating an example of a hardware configuration of the terminal apparatus T1 according to the embodiment. As illustrated in FIG. 4B, the terminal apparatus T1 is a computer, and includes, as an example, a processor 21, a main storage apparatus (memory) 23, an auxiliary storage apparatus (memory) 25, a network interface 27, a device interface 28, a bus 29 that connects the components, a display apparatus 30 connected to the device interface 28, and an input apparatus 31 connected to the device interface 28. Note that specific hardware configurations of the processor 21, the main storage apparatus 23, the auxiliary storage apparatus 25, the network interface 27, the device interface 28, and the bus 29 are similar to those of the processor 11, the main storage apparatus 13, the auxiliary storage apparatus 15, the network interface 17, the device interface 18, and the bus 19, respectively, and thus description thereof is omitted.

The display apparatus 30 is a display apparatus such as a liquid crystal display (LCD), a cathode ray tube (CRT), a plasma display panel (PDP), or an organic electro luminescence (EL) panel. The display apparatus 30 displays, for example, a document review screen to be described below and a document editing screen on the basis of an instruction from the processor 21.

The input apparatus 31 is, for example, a device such as a keyboard, a mouse, or a touch panel. The user can input various editing instructions in document editing processing described below, for example, using the input apparatus 31. The instruction input from the input apparatus 31 is sent to the processor 21.

Note that the terminal apparatus T1 may include another external apparatus (for example, a camera, a microphone, motion capture, various sensors, and the like) connected via the device interface 18 in order to operate and edit document data.

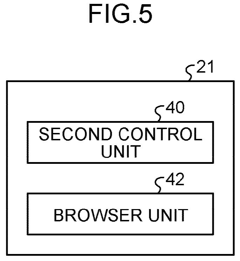

FIG. 5 is a diagram illustrating an example of functional blocks in the processor 21. The processor 21 includes, for example, a second control unit 40 and a browser unit 42 as functions achieved by the processor 21. The functions achieved by the second control unit 40 and the browser unit 42 are stored as programs in, for example, the main storage apparatus 23 or the auxiliary storage apparatus 25. The processor 21 can achieve functions related to the second control unit 40 and the browser unit 42 by reading and executing programs stored in the main storage apparatus 23, the auxiliary storage apparatus 25, or the like.

For example, the second control unit 40 activates the browser unit 42 in response to an instruction from the user.

The browser unit 42 is, for example, a general web browser, and executes processing according to hyper text markup language (HTML) data, a script (for example, JavaScript (registered trademark)), or the like. When activated, the browser unit 42 transmits an initial access URL to the information processing apparatus 10 to access.

The browser unit 42 of the present embodiment displays data including text data and image data received from the information processing apparatus 10 on the display apparatus 30 of the terminal apparatus T1 in a predetermined form. More specifically, in the document review processing, the browser unit 42 displays the document review information, the document data, the additional information, and the like received from the information processing apparatus 10 on the display apparatus 30 of the terminal apparatus T1 in a predetermined form on the basis of layout information. In addition, in the document editing processing, the browser unit 42 of the present embodiment displays the document review information, editing data, the additional information, and the like received from the information processing apparatus 10 on the display apparatus 30 of the terminal apparatus T1 in a predetermined form on the basis of layout information.

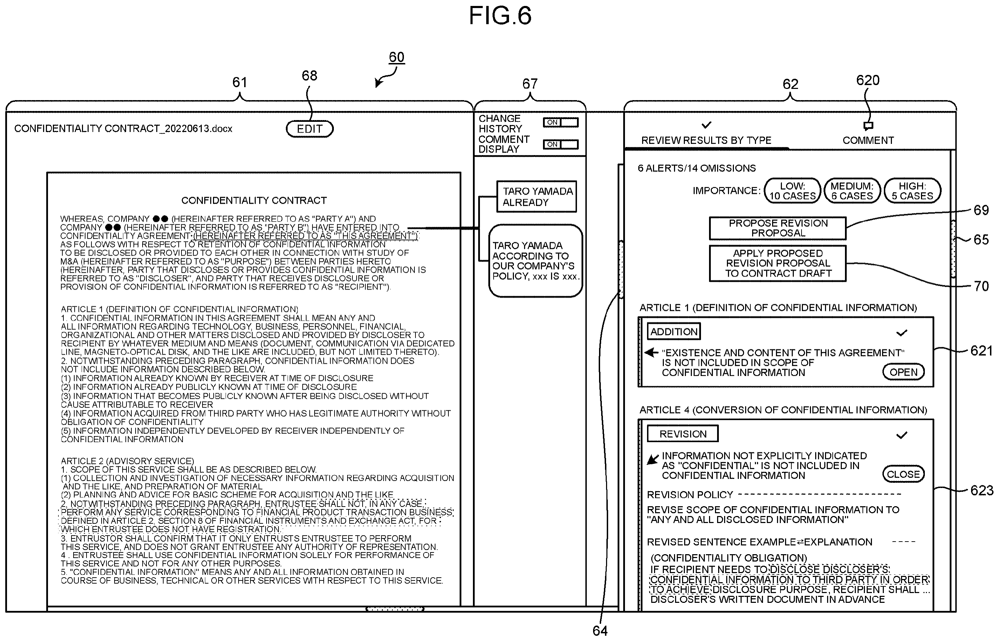

FIG. 6 is a diagram illustrating an example of a document review screen 60 displayed as a web browser screen on the display apparatus 30 of the terminal apparatus T1 in document review processing. As illustrated in FIG. 6, on the document review screen 60 of the present embodiment, the support target document is displayed in a document display area 61, the additional information such as a change history and a comment is displayed in an additional information area 67, and the document review information is displayed in a document review area 62.

For example, an edit button 68 for instructing the start of the document editing processing is displayed in the document display area 61. Next to the additional information area 67 where the additional information is displayed, a scroll bar 64 for scrolling the support target document displayed in the document display area 61 and the additional information displayed in the additional information area 67 in an up-down direction is displayed.

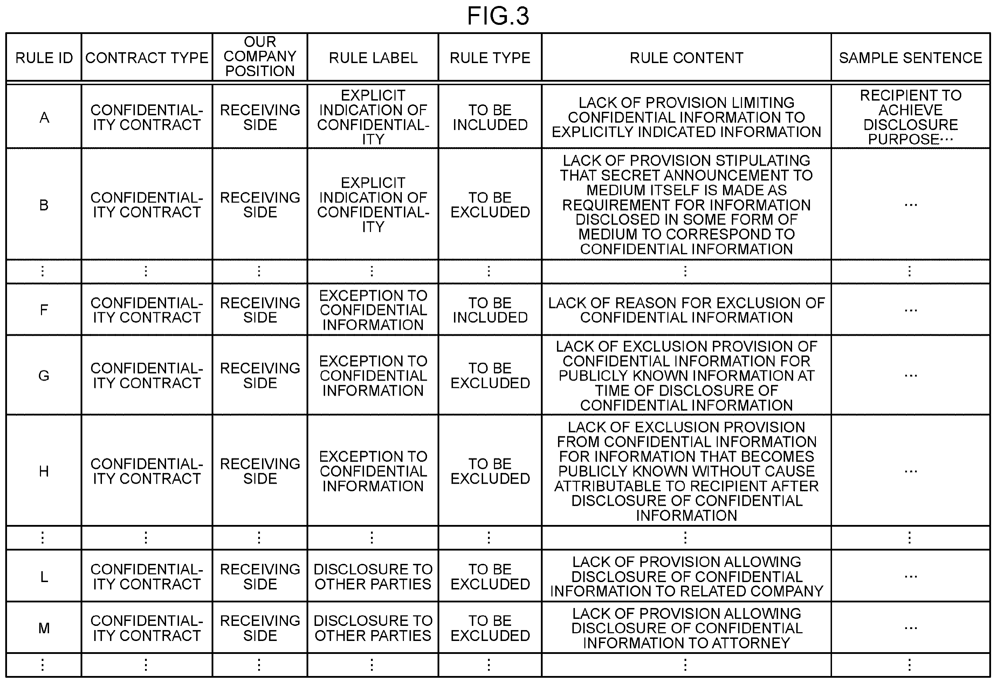

The user clicks a button for starting the document review processing displayed on the screen to give an instruction to start the document review processing. The system accesses a database, performs document review processing, and acquires a revision policy for each input unit. FIG. 3 is an example of a database related to a revision policy.

At this time, all the revision policies set to the type of the input unit (for example, the type of the clause) may be acquired, or some related revision policies for the input units of the support target document may be acquired, but it is preferable to display some revision policies from the viewpoint of convenience of review.

Next, a prompt for acquiring a revised input unit is generated based on the input unit of the support target document and a revision policy for the input unit. The prompt is, for example, a natural language such as "revise text A according to the content of indication A". The prompt is input into the natural language processing model to acquire, as output, a revised input unit generated based on the prompt. In a case where the natural language processing model is outside the system, the system transmits and receives data to and from the information processing apparatus having the natural language processing model using a network such as the Internet.

The generation of the prompt of the natural language processing model may be performed after the review processing and before an instruction to acquire the revised input unit by the user, such as clicking a button 69 to instruct to generate the revised input unit, or it may be generated after the instruction of the user. Note that the "revision policy" in a frame such as 623 in FIG. 6 corresponds to the revision policy in the present specification, and a "revised sentence example" in the frame 623 corresponds to the "sample sentence" in the present specification. In addition, the prompt may also further be generated based on an option policy of the revision. The option policy may include any of bringing wording of a revised output unit as close as possible to wording of the input unit, making the revised output unit more advantageous for the user than the revision policy, and making the revised output unit such that it omits a part of the revision policy. This option policy can be displayed. The user can select a desired policy from the displayed option policies.

In addition, a button 69 indicating that the revised input unit is generated for each of the plurality of input units or revision policies may be provided. As a result, the user can acquire the revised input unit information regarding the input unit considered to be necessary. For example, it is advantageous when it is desired to adjust the number of generation, for example, when the generation of the revised input unit is pay-as-you-go billing.

Next, the system transmits information including the above revised input unit to the user. The system applies a revision proposal to the input unit or the contract, for example, in accordance with user instructions, such as clicking a button 70 indicating application to a contract draft, or automatically. For example, the input unit in the support target document displayed in the browser is replaced with the revised input unit. Before or after the replacement, the user may instruct to edit the revised input unit and generate the revised input unit again. In addition, the acquired revised input unit and a desired instruction may be further input to the natural language processing model to acquire a more preferable revised input unit. In addition, the at least one revised input unit can be generated for each natural language processing model using at least one prompt and a plurality of different natural language processing models, and the at least one revised input unit can be output for each natural language processing model. Further, the at least one revised input unit generated for each natural language processing model may be stored, and the stored at least one revised input unit may be output in response to an instruction from the user.

Note that the button 70 indicating whether to apply to each of the plurality of revised input units may be provided. As a result, revised input information can be checked, and the user can apply the revised input unit information regarding the input unit considered to be necessary. In addition, it may be inspected whether the acquired at least one revised output unit satisfies revision output criteria including the revision policy before outputting the at least one revised input unit.

Note that comment information and chat information described below may be associated with the support target document of the present embodiment.

The comment information associated with the document of the present embodiment is additional information created by at least one user related to creation of the document, and is managed in association with each version of the document, for example. The comment information associated with the document is typically information different from the comment created by document creation software, but may include a comment created by the document creation software as necessary.

The chat information of the present embodiment is additional information generated using a chat function for a document among a plurality of users related to creation of the document, and is managed in association with, for example, a plurality of versions of the document. These pieces of additional information are typically text data, but may also include other data formats such as image, voice, and the like.

For example, the user saves the edited contract. The saved contract can be used by being output, downloaded, and sent from the system as a file such as Word or PDF, or by sending a URL.

Although the embodiments of the present disclosure have been described in detail above, these embodiments have been presented as examples, and are not intended to be limited to individual embodiments. Each embodiment can be modified by various additions, changes, replacements, partial deletions, combinations, and the like. These embodiments and modifications thereof are included the scopes of the invention described in the claims and the equivalent thereof.

## Claims

1. An information processing method comprising:
acquiring a revision policy for each of at least one input unit of a first legal document;
acquiring at least one revised input unit that is revised using at least one prompt and a natural language processing model, the at the least one prompt being generated based on at least the input unit and the revision policy for the input unit; and
outputting the at least one revised input unit.

2. The information processing method according to claim 1, wherein
the acquiring of the revision policy is performed by referring to a database.

3. The information processing method according to claim 2, wherein
the acquiring of the revision policy is,
determining, with a classifier, a type of each of the at least one input unit,
the database including information in which a plurality of types and a plurality of revision policies are associated with each other,
performed using the determined type and the database.

4. The information processing method according to claim 2, comprising:
acquiring the revision policy and a sample sentence for each of the at least one input unit by referring to the database; and
creating the prompt based on the acquired sample sentence.

5. The information processing method according to claim 4, wherein
the database includes information in which a plurality of sample sentences and a plurality of revision policies are associated with each other, and
the information processing method comprising acquiring the revision policy for each of the at least one input unit based on similarity between the at least one input unit and the plurality of sample sentences.

6. The information processing method according to claim 5, wherein
the sample sentence includes a sentence before revision and a sentence after revision.

7. The information processing method according to claim 1, comprising:
generating a plurality of revision candidates that are candidates of the at least one revised input unit using the at least one prompt and the natural language processing model; and
outputting the plurality of revision candidates.

8. The information processing method according to claim 7, comprising:
storing the plurality of revision candidates; and
outputting the plurality of stored revision candidates in response to an instruction from a user.

9. The information processing method according to claim 1, comprising:
generating, using the at least one prompt and a plurality of different natural language processing models, the at least one revised input unit for each of the plurality of natural language processing models; and
outputting the at least one revised input unit for each of the plurality of natural language processing models.

10. The information processing method according to claim 9, comprising:
storing the at least one revised input unit generated for each of the plurality of natural language processing models; and
outputting the at least one stored revised input unit in response to an instruction from a user.

11. The information processing method according to claim 1, wherein
the first legal document is a contract.

12. The information processing method according to claim 11, wherein
the contract is sent from a counterparty of an agreement.

13. The information processing method according to claim 1, wherein
the at least one input unit is any one of an article, a section, and an item.

14. The information processing method according to claim 1, wherein
whether at least one acquired revised output unit satisfies revision output criteria including the revision policy is inspected before outputting the at least one revised input unit.

15. The information processing method according to claim 1, wherein
information displaying a button enabling to replace the input unit of the first legal document with one output revised input unit is transmitted.

16. The information processing method according to claim 1, wherein
the prompt is generated further based on a revision option policy.

17. The information processing method according to claim 16, wherein
the option policy includes any of bringing wording of the revised output unit as close as possible to wording of the input unit, making the revised output unit more advantageous for a user than the revision policy, and making the revised output unit such that it omits a part of the revision policy.

18. The information processing method according to claim 16, wherein
display to allow a user to select the option policy is performed.
